# EUROPÄISCHE PATENTSCHRIFT

(11) **EP 2 923 423 B1**
(45) Veröffentlichungstag und Bekanntmachung des Hinweises auf die Patenterteilung: **07.09.2016**
(21) Anmeldenummer: 13796038.1
(22) Anmeldetag: 25.11.2013
(51) Int. Cl.: H02G 3/22, H02G 15/013

(54) **FLUIDDICHTE LEITUNGSDURCHFÜHRUNG**
FLUID-TIGHT LINE FEEDTHROUGH
PASSAGE DE CONDUCTEUR ÉTANCHE AUX FLUIDES

(30) Priorität: 23.11.2012 DE 102012022837
(43) Veröffentlichungstag der Anmeldung: 30.09.2015
(73) Patentinhaber: MAN Diesel & Turbo SE, 86153 Augsburg (DE)
(72) Erfinder: VETTER, Marcel, 8057 Zürich (CH); ZIGERLIG, Benno, CH-5313 Klingnau (CH); FREHNER, Daniel, 5400 Baden (CH)
(86) Internationale Anmeldenummer: PCT/EP2013/074544
(87) Internationale Veröffentlichungsnummer: WO 2014/080001

(56) Entgegenhaltungen:
- EP-A1- 0 041 914
- GB-A- 742 801
- US-A- 3 017 452

## Beschreibung

Die Erfindung betrifft eine fluiddichte Leitungsdurchführung nach dem Oberbegriff desAnspruchs 1. Das Dokument US 3 017 452 A offenbart eine solche Leitungsduchführung.

Aus der Praxis ist es bereits bekannt, mit Hilfe einer fluiddichten Leitungsdurchführung, die durch eine Wand eines Druckbehälters geführt ist, eine innerhalb des Druckbehälters positionierte Antriebseinheit mit elektrischer Energie zu versorgen. So ist es zum Beispiel zum Transport von Erdgas üblich, mit Hilfe eines in einem mit Erdgas befüllten Druckbehälter positionierten Antriebsmotors einen ebenfalls im Druckbehälter angeordneten Kompressor anzutreiben, um über den Kompressor das zu transportierende Erdgas zu verdichten und hierbei zu verflüssigen. Für den Antriebsmotor muss dabei elektrische Energie von außen über eine elektrische Leitung in den Druckbehälter eingeführt werden, wobei über eine fluiddichte Leitungsdurchführung gewährleistet wird, dass kein Erdgas aus dem Druckbehälter in die Umgebung des Druckbehälters entweicht.

Aus der EP 1 675 241 A1 ist eine fluiddichte Leitungsdurchführung bekannt, wobei die dort offenbarte Leitungsdurchführung ein Gehäuse aufweist, welches gegenüber der Wand des Druckbehälters abgedichtet ist, und wobei in dem Gehäuse ein elektrische Leiter verläuft, welcher der Versorgung einer im Druckbehälter positionierten Antriebseinheit mit elektrischer Energie dient.

Bislang bekannte Leitungsdurchführungen gewährleisten zwar in gewissem Umfang eine fluiddichte Durchführung eines elektrischen Leiters in einen Hochdruckraum zur Versorgung eines in einem Hochdruckraum positionierten elektrischen Verbrauchers mit elektrischer Energie, dieselben verfügen jedoch über eine Vielzahl von Nachteilen.

So verfügen bislang bekannte, fluiddichte Leitungsdurchführungen über den Nachteil, dass es zu unerwünschten elektrischen Teilentladungen oder elektrischen Überschlägen kommen kann, welche die Funktionssicherheit beeinträchtigen. Weiterhin verfügen bislang bekannte fluiddichte Leitungsdurchführungen über den Nachteil, dass dieselben im gewissen Umfang eine Permeation von Gasen (beispielsweise Sauerstoff, Wasserstoff, Helium, Kohlendioxid, Stickstoff, Kohlenwasserstoffen und Spurengassen) zulassen, wodurch die Dichtheit der Leitungsdurchführung eingeschränkt ist. Weitere Undichtigkeiten können sich durch mechanische und thermische Spannungen zwischen den einzelnen Baugruppen der Leistungsdurchführung ausbilden. Weiterhin besteht bei aus der Praxis bekannten, fluiddichten Leitungsdurchführungen das Problem, dass sich bei einem mechanischen Versagen der Leitungsdurchführung einzelne Baugruppen, wie zum Beispiel der elektrische Leiter, lösen und infolge des hohen Drucks im Hochdruckraum geschossartig in die Umgebung gelangen können.

Hiervon ausgehend liegt der vorliegenden Erfindung die Aufgabe zugrunde, eine neuartige Leitungsdurchführung zu schaffen. Diese Aufgabe wird durch eine Leitungsdurchführung nach Anspruch 1 gelöst. Efindungsgemäß ist zwischen dem Gehäuse und dem elektrischen Leiter ein keramischer Isolator positioniert, wobei der keramische Isolator unter Ausbildung einer konischen Trennebene in ein erstes, dem elektrischen Leiter zugewandtes Isolatorsegment und in ein zweites, dem Gehäuse zugewandtes Isolatorsegment geteilt ist, und wobei zwischen den beiden Segmenten eine Armatur aus einem elektrisch leitfähigen Material positioniert ist, die mit den beiden Segmenten und dem Gehäuse verbunden ist.

Dadurch, dass die erfindungsgemäße Leitungsdurchführung den zweigeteilten keramischen Isolator aufweist, dessen Trennebene zwischen den beiden Isolatorsegmenten konisch konturiert ist, können die Funktionsanforderungen an eine elektrische Isolation der Leitungsdurchführung und an die Dichtheit gegenüber dem im Hochdruckraum befindlichen Medium funktional getrennt und gleichzeitig erfüllt werden.

Ein keramischer Isolator verhindert eine Permeation von Gasen durch die Leitungsdurchführung und verfügt daher über bessere Dichtheitseigenschaften. Die Trennung des keramischen Isolators in die beiden Isolatorsegmente unter Ausbildung der konischen Trennebene sorgt darüber hinaus für eine optimale Einleitung des mechanischen Drucks auf das Gehäuse der Leitungsdurchführung. Die konische Konturierung der Trennfläche der beiden Isolatorsegmente in Kombination der zwischen den beiden Segmenten sandwichartig positionieren Armatur aus dem elektrisch leitfähigen Material stellt darüber hinaus eine optimale elektrische Feldlinienführung in der Leitungsdurchführung bereit, wodurch unerwünschte elektrische Teilentladungen oder elektrische Überschläge vermieden werden können.

Die erfindungsgemäße Leitungsdurchführung vermeidet demnach die Nachteile des Standes der Technik.

Nach einer vorteilhaften Weiterbildung ist zwischen dem ersten, dem elektrischen Leiter zugewandten Isolatorsegment und dem elektrischen Leiter ein Spalt in einer Größenordung zwischen 0.01 mm bis 0.1 mm, insbesondere in einer Größenordnung zwischen 0.03 mm bis 0.05 mm, ausgebildet.
Über die Einstellung eines solchen, definierten Spalts zwischen dem elektrischen Leiter und dem Isolator können durch unterschiedliche Wärmeausdehnungen der jeweiligen Bauelemente der Leitungsdurchführung verursachte thermische sowie mechanische Spannungen vermieden werden.
Vorzugsweise ist das erste, dem elektrischen Leiter zugewandte Isolatorsegment an einer dem elektrischen Leiter zugewandten Innenfläche metallisiert.
Weiterhin können hierdurch, insbesondere in Kombination mit der Metallisierung der dem elektrischen Leiter zugewandten Innenfläche des ersten Isolatorsegments elektrische Teilentladungen im Spalt verhindert werden. Diese können letztlich zu einem elektrischen Überschlag führen.

Nach einer weiteren vorteilhaften Weiterbildung weisen der elektrische Leiter, der keramische Isolator und das Gehäuse abgestufte Durchmesser auf. Der elektrische Leiter weist an einem hochdruckraumseitigen Abschnitt einen größeren Außendurchmesser als an einem niederdruckraumseitigen Abschnitt auf, derart, dass der hochdruckraumseitige Abschnitt des elektrischen Leiters einen hochdruckraumseitigen Abschnitt des keramischen Isolators hintergreift. Das Gehäuse weist an einem hochdruckraumseitigen Abschnitt eine größeren Innendurchmesser als an einem niederdruckraumseitigen Abschnitt auf, derart, dass der niederdruckraumseitige Abschnitt des Gehäuses einen mittleren Abschnitt des keramischen Isolators hintergreift.

Diese Abstufung der Durchmesser von elektrischem Leiter, keramischem Isolator und Gehäuse stellt sicher, dass bei einem mechanischen Versagen der Leitungsdurchführung keine der Bauelemente bzw. Baugruppen der Leitungsdurchführung geschossartig in die Umgebung gelangt. Vielmehr hält bei einem mechanischen Versagen der Leitungsdurchführung das Gehäuse sowohl den keramischen Isolator als auch den elektrischen Leiter in Position.

Nach einer weiteren vorteilhaften Weiterbildung ist am hochdruckraumseitigen Ende eine erste Vergussmasse, welche über eine sehr gute chemische Beständigkeit, hohe Temperaturfestigkeit, hohe Elastizität nach dem Aushärten und hohe elektrische Durchschlagsfestigkeit verfügt, wobei die erste Vergussmasse den keramischen Isolator und den elektrischen Leiter abschnittsweise umgibt. Empfehlenswert ist die Verwendung einer ersten Vergussmasse (beispielsweise Epoxidharz oder Polyurethan) mit einer Füllung eines pulverförmigen anorganischen Isolatorsystems (beispielsweise Al₂O₃ oder TiO₂) Am niederdruckraumseitigen Ende ist eine zweite Vergussmasse (beispielsweise Silikon) mit den Eigenschaften hohe Temperaturfestigkeit, hohe Elastizität nach dem Aushärten und hohe elektrische Durchschlagsfestigkeit vorgesehen, wobei die zweite Vergussmasse den keramischen Isolator und den elektrischen Leiter abschnittsweise umgibt.

Die Verwendung der ersten Vergussmasse am hochdruckraumseitigen Ende sowie die Verwendung der zweiten Vergussmasse am niederdruckraumseitigen Ende der Leitungsdurchführung verbessert die Dichtheit der Leitungsdurchführung.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

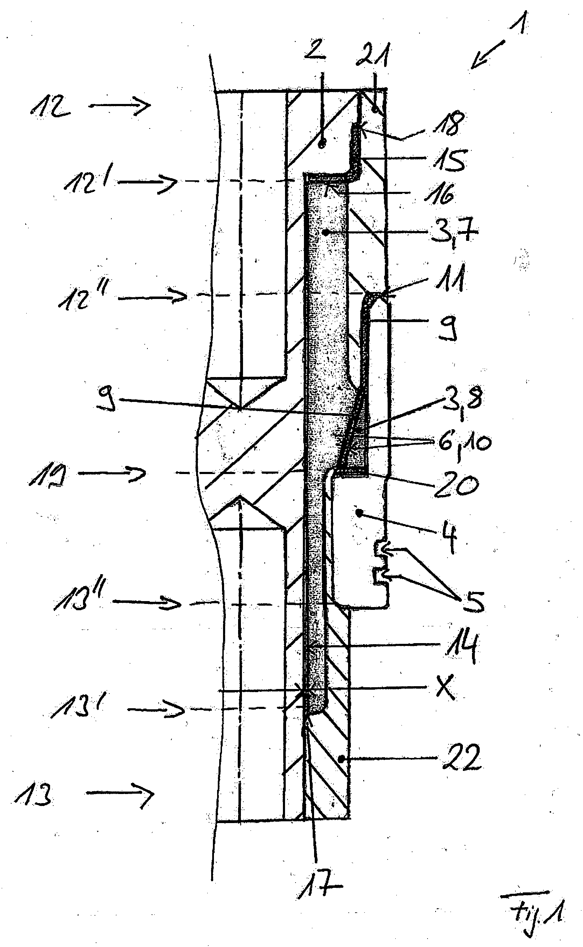

Fig. 1: einen schematisierten Querschnitt durch eine erfindungsgemäße Leitungsdurchführung.

Die hier vorliegende Erfindung betrifft eine elektrische Leitungsdurchführung, die dem Durchführen eines elektrischen Leiters durch eine Wand eines Druckbehälters dient, wobei die Wand des Druckbehälters einen Niederdruckraum bzw. die Umgebung außerhalb des Druckbehälters von einem Hochdruckraum innerhalb des Druckbehälters trennt. Über die Leitungsdurchführung kann ein im Druckbehälter positionierter elektrischer Verbraucher, wie zum Beispiel ein elektrischer Antrieb, mit elektrischer Energie versorgt werden.

Fig. 1 zeigt einen ausschnittsweisen Querschnitt durch ein Ausführungsbeispiel einer erfindungsgemäßen, fluiddichten Leitungsdurchführung 1, die dem Durchführen eines elektrischen Leiters 2 durch eine den Niederdruckraum bzw. die Umgebung und den Hochdruckraum trennende Wand eines Druckbehälters dient, wobei der elektrische Leiter 2 radial außen abschnittsweise von einem elektrischen Isolator 3 umgeben ist, und wobei der elektrische Isolator 3 radial außen abschnittsweise von einem Gehäuse 4 der Leitungsdurchführung 1 umgeben ist.

Über das Gehäuse 4 ist die elektrische Leitungsdurchführung 1 in die Wand des Druckbehälters einsetzbar, wobei Nuten 5 im Gehäuse 4 der Aufnahme von Dichtringen dienen, um das Gehäuse 4 der Leitungsdurchführung 1 gegenüber der Wand des Druckbehälters abzudichten.

Der Isolator 3, der zwischen dem Gehäuse 4 und dem elektrischen Leiter 2 positioniert ist, ist als keramischer Isolator ausgeführt, vorzugsweise aus einer Aluminiumoxid-Keramik. Ein solcher keramischer Isolator 3 verhindert eine Permeation von Gasen, insbesondere von Kohlenwasserstoffen und Spurengasen, wie zum Beispiel H₂S und Hg zu, sodass keine Gefahr besteht, dass infolge von Permeation derartige Gase ausgehend vom Hochdruckraum des Druckbehälters in den Bereich des Niederdruckraums bzw. die Umgebung des Druckbehälters gelangen.

Der keramische Isolator 3 ist unter Ausbildung einer konischen Trennebene 6 in zwei Isolatorsegmente geteilt, nämlich in ein erstes, dem elektrischen Leiter 2 zugewandtes Isolatorsegment 7 und in ein zweites, dem Gehäuse 4 zugewandte Isolatorsegment 8. Zwischen diesen beiden Isolatorsegmenten 7 und 8 erstreckt sich zumindest im Bereich dieser Trennebene 6 eine Armatur 9 aus einem elektrisch leitfähigen Material. Vorzugsweise ist diese Armatur 9 aus Kupfer bzw. einer Kupferlegierung gefertigt.

Über die Trennung des keramischen Isolators 3 in die beiden Isolatorsegmente 7 und 8 unter Ausbildung der konischen Trennebene 6 ist es möglich, den auf den Isolator 3 und/oder elektrischen Leiter 2 einwirkenden Druck optimal auf das Gehäuse 4 einzuleiten. Die Leitungsdurchführung 1 erlaubt demnach eine gute mechanische Druckeinleitung auf das Gehäuse 4 und ist daher unempfindlich gegenüber mechanischen Beanspruchungen bzw. Belastungen.

Die sich im Bereich der konischen Trennebene 6 zwischen den beiden Isolatorsegmenten 7 und 8 erstreckende Armatur 9 ist sandwichartig zwischen den Isolatorsegmenten 7 und 8 aufgenommen, wobei diese sandwichartig zwischen den Isolatorsegmenten 7 und 8 aufgenommene Armatur 9 aus dem elektrisch leitfähigen Material eine elektrische Feldlinienführung gewährleistet, die unter Berücksichtigung von Randbedingungen der Hochspannungstechnik elektrische Teilentladungen sowie elektrische Überschläge vermeidet. Insbesondere im Bereich des keramischen Isolators 3 ist eine optimale Feldlinienführung gewährleistet.

Trennflächen 10 der beiden Isolatorsegmente 7 und 8 des keramischen Isolators 3, welche die konische Trennebene 6 definieren, sind metallisiert, also mit einer metallischen Beschichtung versehen, wobei die Armatur 9 aus dem elektrischen leitfähigen Material über die metallisieren Trennflächen 10 der beiden Isolator-segmente 7 und 8 mit dem keramischen Isolator 3 durch Löten verbunden ist. Dies gewährleistet eine optimale Verbindung der Armatur 9 mit den beiden Isolatorsegmenten 7 und 8 des keramischen Isolators 3, nämlich unter Vermeidung von mechanischen und thermischen Spannungen infolge der Verbindung. Hierdurch wird demnach die fluiddichte Leitungsdurchführung 1 unempfindlich gegenüber thermischen Wechselbeanspruchungen sowie mechanischen Beanspruchungen.

Die Armatur 9 erstreckt sich nicht nur im Bereich der Trennebene 6 zwischen den beiden Isolatorsegmenten 7 und 8, sondern vielmehr auch mit einem Abschnitt außerhalb dieser Trennebene 6, wobei der sich außerhalb der Trennebene 6 erstreckende Abschnitt der Armatur 9 mit einem Abschnitt des Gehäuses 4 durch Schweißen, nämlich durch Ausbildung einer Schweißnaht 11, verbunden ist. Diese Schweißverbindung 11 zwischen der Armatur 9 und dem Gehäuse 4 erfolgt im Bereich eines hochdruckraumseitigen Endes des Gehäuses 4.

In Fig. 1 ist ein hochdruckraumseitiges Ende der Leitungsdurchführung 1 mit der Bezugsziffer 12 und ein niederdruckraumseitiges Ende der Leitungsdurchführung 1 mit der Bezugsziffer 13 gekennzeichnet.

Das hochdruckraumseitige Ende 12 der Leitungsdurchführung 1 fällt dabei mit dem hochdruckraumseitigen Ende des elektrischen Leiters 2 zusammen. Das niederdruckraumseitige Ende 13 der Leitungsdurchführung 1 fällt mit dem niederdruckraumseitigen Ende des elektrischen Leiters 2 zusammen.

Ein hochdruckraumseitiges Ende 12' des keramischen Isolators 3 sowie ein niederdruckraumseitiges Ende 13' des keramischen Isolators 3 sind jeweils gegenüber dem hochdruckraumseitigen Ende, 12 und dem niederdruckraumseitigen Ende 13 des elektrischen Leiters 2 zurückversetzt, sodass demnach der elektrische Leiter 2 beidseitig gegenüber dem keramischen Isolator 3 vorsteht. Ebenso sind das hochdruckraumseitige Ende 12" des Gehäuses 4 gegenüber dem hochdruckraumseitigen Ende 12' des keramischen Isolators 3 und das niederdruckraumseitige Ende 13" des Gehäuses 4 gegenüber dem niederdruckraumseitigen Ende 13' des keramischen Isolators 3 zurückversetzt ist, sodass demnach der keramische Isolator 3 beidseitig gegenüber dem Gehäuse 4 vorsteht.

Vorzugsweise ist zwischen dem ersten, dem elektrischen Leiter 2 zugewandten Isolatorsegment 7 des keramischen Isolators 3 und dem elektrischen Leiter 2 ein Spalt 17 mit einem definierten Spaltmaß X ausgebildet, welches in einer Größenordnung zwischen 0.01 mm und 0.1 mm, insbesondere in einer Größenordnung zwischen 0.03 mm und 0.05 mm, liegt.

Der keramische Isolator 3, nämlich das dem elektrischen Leiter 2 zugewandte erste Isolatorsegment 7 desselben, ist an einer dem elektrischen Leiter 2 zugewandten Innenfläche 14 metallisiert, also metallisch beschichtet. Hierdurch werden insbesondere thermische Beanspruchungen infolge von thermischen Wechselbelastungen vermieden, andererseits kann hierdurch die Feldlinienführung elektrische Feldlinien verbessert werden.

Nach einer vorteilhaften Weiterbildung der Erfindung weisen der elektrische Leiter 2, der keramische Isolator 3 und das Gehäuse 4 abgestufte Durchmesser auf. Der elektrische Leiter 2 verfügt an einem hochdruckraumseitigen Abschnitt über einen größeren Außendurchmesser als an einem niederdruckraumseitigen Abschnitt, nämlich derart, dass der hochdruckraumseitige Abschnitt des elektrischen Leiters 2 einen hochdruckraumseitigen Abschnitt des keramischen Isolators 3 hintergreift.

So kann Fig. 1 entnommen werden, dass diese Durchmesserabstufung des Außendurchmessers des elektrischen Leiters 2 im Bereich des hochdruckraumseitigen Endes 12' des keramischen Isolators 3 erfolgt, wobei in diesem Bereich zwischen dem elektrischen Leiter 2 und dem keramischen Isolator 3 eine weitere Armatur 15 aus einem elektrisch leitfähigen Material positioniert ist.

Diese weitere Armatur 15 aus einem elektrisch leitfähigen Material ist im Querschnitt L-förmig abgewinkelt, wobei eine der weiteren Armatur 15 zugewandte Fläche des keramischen Isolators 3 am hochdruckraumseitigen Ende 12' desselben metallisiert ist, um eine gute Verbindung durch Löten zwischen dem keramischen Isolator 13 und der weiteren Armatur 15 bereitzustellen, die ebenso wie die Lötverbindung zwischen der Armatur 9 und den beiden Isolatorsegmenten 7 und 8 im Bereich der konischen Trennfläche 6 unempfindlich gegenüber thermischen Wechselbeanspruchungen ist.

Wie bereits ausgeführt, ist die Armatur 9 nicht nur durch Löten mit den beiden Isolatorsegmenten 7 und 8 des keramischen Isolators 3 im Bereich der konischen Trennfläche 6 verbunden, sondern vielmehr durch Verschweißen mit dem Gehäuse 4 im Bereich des hochdruckraumseitigen Endes 12' des Gehäuses 4.

Ebenso ist die weitere Armatur 15 nicht durch Löten mit dem ersten Isolatorsegment 7 des keramischen Isolators 3 verbunden, sondern zusätzlich durch Verschweißen mit dem elektrischen Leiter 2, wobei in Fig. 1 die Schweißverbindung zwischen dem elektrischen Leiter 2 und der weiteren Armatur 15 durch eine Bezugsziffer 18 gekennzeichnet ist.

Die Schweißverbindung 18 zwischen dem elektrischen Leiter 2 und der weiteren Armatur 15 erfolgt demnach im Bereich des hochdruckraumseitigen Abschnitts des elektrischen Leiters 2 mit dem größeren Außendurchmesser.

Ferner verfügt das Gehäuse 4 über einen abgestuften Durchmesser, wobei das Gehäuse 4 an einem hochdruckraumseitigen Abschnitt einen größeren Innendurchmesser als an einem niederdruckraumseitigen Abschnitt aufweist. Diese Durchmesserabstufung des Innendurchmessers des Gehäuses 4 erfolgt im Bereich eines mittleren Abschnitts 19 des keramischen Isolators 3 bzw. des Gehäuses 4, wobei der niederdruckraumseitige Abschnitt des Gehäuses 4 mit dem kleineren Innendurchmesser einen mittleren Abschnitt 19 des keramischen Isolators 3 hintergreift.

Zwischen den korrespondierenden Flächen vom keramischen Isolator 3 und Gehäuse 4 ist ein Element 20 aus einem elektrisch leitfähigen Werkstoff angeordnet, welches die Aufgabe hat Oberflächenunebenheiten zwischen dem Gehäuse 4 und dem Isolator 3 zu kompensieren, so dass in dem Isolator 3 keine unzulässigen mechanischen Spannungen auftreten.

Durch die obige Abstufung der Durchmesser vom elektrischen Leiter 2, keramischein Isolator 3 und Gehäuse 4 wird gewährleistet, dass bei einem mechanischen Versagen der Leitungsdurchführung 1 sowohl der elektrische Leiter 2 als auch der keramische Isolator 3 jeweils in ihrer Position gehalten werden und bedingt durch den Hochdruck im Hochdruckraum nicht geschossartig in die Umgebung gelängen und in der Umgebung befindliche Personen verletzen oder in der Umgebung positionierte Gegenstände beschädigen können.

Zusätzlich zum bereits erwähnten elektrischen Leiter 2, keramischen Isolator 3, dem Gehäuse 4, den beiden Armaturen 9 und 15 sowie dem Element 20 aus einem jeweils elektrisch leitfähigen Material umfasst die Leitungsdurchführung 1 zwei Vergussmassen, nämlich eine erste Vergussmasse 21 (beispielsweise aus einem Epoxydharz) am hochdruckraumseitigen Ende, wobei diese erste Vergussmasse 21 den keramischen Isolator 3 und den elektrischen Leiter 2 abschnittsweise hochdruckraumseitigen Ende 12 bzw. 12' radial außen umgibt. Eine zweite Vergussmasse 22 (beispielsweise aus einem Silikon) ist am niederdruckraumseitigen Ende positioniert und umgibt den keramischen Isolator 3 und den elektrischen Leiter 2 am niederdruckraumseitigen Ende 13 bzw. 13' derselben abschnittsweise.

Die erste Vergussmasse 21 im Bereich des hochdruckraumseitigen Endes verfügt über eine gute chemische Beständigkeit, hohe Temperaturfestigkeit, geringe Volumenschrumpfung, eine geringe Wasserlöslichkeit und eine hohe Durchschlagfestigkeit. Die zweite Vergussmasse 22 am niederdruckraumseitigen Ende verfügt über eine hohe Temperaturfestigkeit, geringe Viskosität und hohe Durchschlagfestigkeit.

Wie bereits oben ausgeführt, sind die abgestuften Durchmesser von elektrischem Leiter 2, keramischem Isolator 3 und Gehäuse 4 von Vorteil, um bei einem mechanischen Versagen der Leitungsdurchführung die einzelnen Baugruppen der Leitungsdurchführung in Position zu halten, um so zu vermeiden, dass einzelne Baugruppen bedingt durch den im Hochdruckraum herrschenden Hochdruck unkontrolliert und geschossartig in die Umgebung gelangen.

Ein weiterer Vorteil der erfindungsgemäßen Leitungsdurchführung 1 besteht darin, dass dieselbe infolge ihrer konstruktiven Ausführung nur geringen Spannungen, innbesondere Scherspannungen, ausgesetzt ist, da sowohl mechanische Belastungen als auch thermische Belastungen gering gehalten werden.

So erfolgt das Verschweißen der Armaturen 9 und 15 mit dem Gehäuse 4 bzw. dem elektrischen Leiter 2 spannungsarm und stoffschlüssig, dabei erfolgt die formschlüssige Verbindung der Armatur 9 zur Stahlhülse an der Oberseite und seitlich an der Armatur und zudem noch zum elektrischen Leiter 2.

Das Schweißen erfolgt vorzugsweise unter Verwendung einer reduzierten Argonatmosphäre über Laserschweißen, um Oxidationen zu verhindern. Hierdurch kann die Ausbildung sogenannter Lunker und anderer Schweißfehler bei der Ausbildung der Schweißverbindungen 11 und 18 zwischen den Armaturen 9, 15 und dem Gehäuse 4 bzw. dem elektrischen Leiter 2 vermieden werden. Die Schweißverbindungen 11 und 15 zeichnen sich durch eine hohe Dichtigkeit und geringe Leckraten gegenüber Gasen aus (üblicherweise kleiner 1*10⁻⁹ mbar/sec⁻¹ für beispielsweise Helium).

Die Lötverbindung zwischen Armatur 9 und dem Isolator 3 sowie die Lötverbindung zwischen der weiteren Armatur 15 und dem Isolator 3 erfolgt über entsprechend metallisierte Flächen im Bereich des keramischen Isolators 3, wodurch ebenfalls mechanische Spannungen bei der Verbindung der entsprechenden Einzelteile der Leitungsdurchführung 1 vermieden werden können. Das Löten erfolgt unter Hochvakuum. Hierbei können Lufteinschlüsse oder Ausgasungen an den durch Löten zu verbindenden Bauteilen vermieden werden.

Die Lötverbindungen sowie die Schweißverbindungen zeichnen sich durch eine hohe Dichtigkeit und geringe Leckraten gegenüber Gasdurchtritt aus.

Das Vergießen mit den Vergussmassen 21 und 22 erfolgt ebenfalls unter Vakuum, wodurch Luftblasen in den Vergussmassen vermieden werden. Ferner wird gewährleistet, dass die jeweilige Vergussmasse 21, 22 auch in Engstellen zwischen dem Gehäuse 4 und dem keramischen Isolator 3 sowie in Engstellen zwischen der Armatur 9 und dem keramischen Isolator 3 eindringen kann. Dies hat ferner einen vorteilhaften Einfluss auf die elektrische Feldlinienführung, da Luftblasen, welche sich negativ auf elektrische Feldlinienführungen auswirken, vermieden werden.

Ferner zeichnet sich die erfindungsgemäße Leitungsdurchführung 1 durch eine optimale elektrische Feldlinienführung aus, mit Hilfe derer elektrische Teilentladungen sowie elektrische Überschläge vermieden werden können. In diesem Zusammenhang ist einerseits die konische Trennebene 6 zwischen den beiden Isolatorsegmenten 7 und 8 und die sandwichartige Positionierung der Armatur 9 im Bereich der Trennebene 6 zwischen den beiden Isolatorsegmenten 7 und 8 von Bedeutung. Hierdurch kann eine optimale Feldlinienführung im keramischen Isolator 3 gewährleistet werden.

Der keramische Isolator 3 besteht vorzugsweise aus einer AluminiumoxidKeramik. Der elektrische Leiter 2 besteht vorzugsweise aus Kupfer. Das Gehäuse 4 besteht vorzugsweise aus rostfreiem Stahl. Die Armaturen 9 und 15 bestehen vorzugsweise aus Kupfer bzw. einer Kupferlegierung. Bei der Ausbildung der Lötverbindungen kommt vorzugsweise ein eutektisches Ag/Cu-Lot zum Einsatz. Das Element 20 besteht vorzugsweise ebenso wie die beiden Armaturen 9 und 15 aus Kupfer bzw. einer Kupferlegierung. Die Auswahl der Materialien für die einzelnen Baugruppen der erfindungsgemäßen Leitungsdurchführung erfolgt derart, dass mechanische Spannungen und thermische Spannungen in der Leitungsdurchführung 1 minimal sind. Die mechanische Lagerung des Keramikisolators durch das Element 20 auf das Gehäuse 4 sowie der beiden Armaturen 9, 15 verhindern unzulässige Zugspannungen auf en keramischen Isolator 3, welche aufgrund von mechanischen sowie thermischen Wechsellasten auftreten können.

Vorzugsweise sind sämtliche Komponenten aus Kupfer, also der elektrischen Leiter 2, die Armaturen 9 und 15 sowie das Element 20, mit Nickel beschichtet. Hierdurch kann die Korrosionsbeständigkeit dieser Baugruppen und damit der fluiddichten Leitungsdurchführung 1 verbessert werden. Diese Beschichtung der Kupferbauteile mit Nickel erfolgt zumindest an den Flächen, die direkt oder indirekt mit dem gasförmigen Medium im Hochdruckraum des Druckbehälters in Kontakt kommen können.

### Bezugszeichenliste

- 1: Leitungsdurchführung
- 2: elektrischer Leiter
- 3: keramischer Isolator
- 4: Gehäuse
- 5: Nut
- 6: Trennebene
- 7: Isolatorsegment
- 8: Isolatorsegment
- 9: Armatur
- 10: Trennfläche / Metallisierung
- 11: Schweißung
- 12: hochdruckraumseitiges Ende
- 12': hochdruckraumseitiges Ende
- 12": hochdruckraumseitiges Ende
- 13: niederdruckraumseitiges Ende
- 13': niederdruckraumseitiges Ende
- 13": niederdruckraumseitiges Ende
- 14: Innenfläche.
- 15: Armatur
- 16: Fläche / Metallisierung
- 17: Spalt
- 18: Schweißung
- 19: mittlerer Abschnitt
- 20: Element
- 21: Vergussmasse
- 22: Vergussmasse

## Patentansprüche

1. Fluiddichte Leitungsdurchführung zum Einführen eines elektrischen Leiters (2) in einen Hochdruckraum, mit einem Gehäuse (4) und mit einem das Gehäuse (4) durchdringenden, elektrischen Leiter (2), **dadurch gekennzeichnet, dass** zwischen dem Gehäuse (4) und dem elektrischen Leiter (2) ein keramischer Isolator (3) positioniert ist, wobei der keramische Isolator (3) unter Ausbildung einer konischen Trennebene (6) in ein erstes, dem elektrischen Leiter (2) zugewandtes Isolatorsegment (7) und in ein zweites, dem Gehäuse (4) zugewandtes Isolatorsegment (8) unterteilt ist, und wobei zwischen den beiden Segmenten (7, 8) eine Armatur (9) aus einem elektrisch leitfähigen Material positioniert ist, die mit den beiden Segmenten (7, 8) und dem Gehäuse (4) verbunden ist.

2. Leitungsdurchführung nach Anspruch 1, **dadurch gekennzeichnet, dass** Trennflächen (10) der konischen Trennebene (6) metallisiert sind, und dass die Armatur (9) mit den Trennflächen (19) des keramischen Isolators (3) durch Löten verbunden ist.

3. Leitungsdurchführung nach Anspruch 1 oder 2, **dadurch gekennzeichnet, dass** die Armatur (9) mit dem Gehäuse (4) durch Schweißen verbunden ist.

4. Leitungsdurchführung nach einem der Ansprüche 1 bis 3, **dadurch gekennzeichnet, dass** zwischen dem ersten, dem elektrischen Leiter (2) zugewandten Isolatorsegment (7) und dem elektrischen Leiter (2) ein Spalt (17) in einer Größenordung zwischen 0.01 mm bis 0.1 mm, insbesondere in einer Größenordnung zwischen 0.03 mm bis 0.05 mm, ausgebildet ist.

5. Leitungsdurchführung nach einem der Ansprüche 1 bis 4, **dadurch gekennzeichnet, dass** das erste, dem elektrischen Leiter (2) zugewandte Isolatorsegment (7) an einer dem elektrischen Leiter (2) zugewandten Innenfläche (14) metallisiert ist.

6. Leitungsdurchführung nach einem der Ansprüche 1 bis 5, **dadurch gekennzeichnet, dass** der elektrische Leiter (2), der keramische Isolator (3) und das Gehäuse (4) abgestufte Durchmesser aufweisen.

7. Leitungsdurchführung nach Anspruch 6, **dadurch gekennzeichnet, dass** der elektrische Leiter (2) an einem hochdruckraumseitigen Abschnitt einen größeren Außendurchmesser als an einem niederdruckraumseitigen Abschnitt aufweist, derart, dass der hochdruckraumseitige Abschnitt des elektrischen Leiters (2) einen hochdruckraumseitigen Abschnitt des keramischen Isolators (3) hockdruckraumseitig hintergreift, und **dass** das Gehäuse (4) an einem hochdruckraumseitigen Abschnitt eine größeren Innendurchmesser als an einem niederdruckraumseitigen Abschnitt aufweist, derart, dass der niederdruckraumseitige Abschnitt des Gehäuses (4) einen mittleren Abschnitt des keramischen Isolators (3) niederdruckraumseitig hintergreift.

8. Leitungsdurchführung nach Anspruch 7, **dadurch gekennzeichnet, dass** zwischen dem hochdruckraumseitige Abschnitt des elektrischen Leiters (2) und dem hochdruckraumseitigen Abschnitt des keramischen Isolators (3) eine weitere Armatur (15) aus einem elektrisch leitfähigen Material positioniert ist, die mit dem keramischen Isolator (3) und mit dem elektrischen Leiter (2) verbunden ist.

9. Leitungsdurchführung nach Anspruch 8, **dadurch gekennzeichnet, dass** der keramischen Isolator (3) an einer der weiteren Armatur (15) zugewandten Fläche (16) metallisiert ist, und dass die weitere Armatur (9) mit dieser Fläche (16) des keramischen Isolators (3) durch Löten verbunden ist.

10. Leitungsdurchführung nach Anspruch 8 oder 9, **dadurch gekennzeichnet, dass** die weitere Armatur (15) mit dem elektrischen Leiter (2) durch Schweißen verbunden ist.

11. Leitungsdurchführung nach einem der Ansprüche 7 bis 10, **dadurch gekennzeichnet, dass** zwischen dem niederdruckraumseitigen Abschnitt des Gehäuses (4) und dem mittleren Abschnitt des keramischen Isolators eine elektrisch leitfähiges Element (20) positioniert ist.

12. Leitungsdurchführung nach einem der Ansprüche 1 bis 11, **gekennzeichnet durch** eine erste Vergussmasse (21) aus einem Epoxydharz am hochdruckraumseitigen Ende, wobei die erste Vergussmasse (21) den keramischen Isolator (3) und den elektrischen Leiter (2) abschnittsweise umgibt.

13. Leitungsdurchführung nach einem der Ansprüche 1 bis 12, **gekennzeichnet durch** eine zweite Vergussmasse (22) aus einem Silikon am niederdruckraumseitigen Ende, wobei die zweite Vergussmasse (22) den keramischen Isolator (3) und den elektrischen Leiter (2) abschnittsweise umgibt.

14. Leitungsdurchführung nach einem der Ansprüche 1 bis 13, **dadurch gekennzeichnet, dass** die oder jede Armatur (9, 15) aus einem Kupferwerkstoff besteht.

## Claims

1. A fluid-tight line gland for introducing an electrical conductor (2) into a high-pressure chamber, with a housing (4) and with an electrical conductor (2) penetrating the housing (4), **characterized in that** between the housing (4) and the electrical conductor (2) a ceramic insulator (3) is positioned, wherein the ceramic insulator (3) is divided, subject to forming a conical separating plane (6), is divided into a first insulator segment (7) facing the electrical conductor (2) and a second insulator segment (8) facing the housing (4), and wherein between the two segments (7, 8) an armouring (9) consisting of an electrically conductive material is positioned, which is connected to the two segments (7, 8) and the housing (4).

2. The line gland according to Claim 1, **characterized in that** separating faces (10) of the conical separating plane (6) are metalized, and **in that** the armouring (9) is connected to the separating surfaces (19) of the ceramic insulator (3) by soldering.

3. The line gland according to Claim 1 or 2, **characterized in that** the armouring (9) is connected to the housing (4) by welding.

4. The line gland according to any one of the Claims 1 to 3, **characterized in that** between the first insulator segment (7) facing the electrical conductor (2) and the electrical conductor (2) a gap (17) in an order of magnitude between 0.01 mm to 0.1 mm, in particular in an order of magnitude between 0.03 mm to 0.05 mm is formed.

5. The line gland according to any one of the Claims 1 to 4, **characterized in that** the first insulator segment (7) facing the electrical conductor (2) is metalized on an inner face (14) facing the electrical conductor (2).

6. The line gland according to any one of the Claims 1 to 5, **characterized in that** the electrical conductor (2), the ceramic insulator (3) and the housing (4) have stepped diameters.

7. The line gland according to Claim 6, **characterized in that** the electrical conductor (2) on a portion on the high-pressure chamber side has a larger outer diameter than on a portion on the low-pressure chamber side such that the portion of the electrical conductor (2) on the high-pressure chamber side engages behind a portion of the ceramic insulator (3) on the high-pressure chamber side on the high-pressure chamber side, and **in that** the housing (4) has a larger inner diameter on a portion on the high-pressure chamber side than on a portion on the low-pressure side such that the portion of the housing (4) on the low-pressure chamber side engages behind a middle portion of the ceramic insulator (3) on the low-pressure chamber side.

8. The line gland according to Claims 7, **characterized in that** between the portion of the electrical conductor (2) on the high-pressure side and the portion of the ceramic insulator (3) on the high-pressure chamber side a further armouring (15) of an electrically conductive material is positioned, which is connected to the ceramic insulator (3) and the electrical conductor (2).

9. The line gland according to Claims 8, **characterized in that** the ceramic insulator (3) is metalized on a face (16) facing the further armouring (15), and **in that** the further armouring (9) is connected to this face (16) of the ceramic insulator (3) by soldering.

10. The line gland according to Claim 8 or 9, **characterized in that** the further armouring (15) is connected to the electrical conductor (2) by welding.

11. The line gland according to any one of the Claims 7 to 10, **characterized in that** between the portion of the housing (4) on the low-pressure chamber side and the middle portion of the ceramic insulator an electrically conductive element (20) is positioned.

12. The line gland according to any one of the Claims 1 to 11, **characterized by** a first casting compound (21) of an epoxy resin on the end on the high-pressure chamber side, wherein the first casting (21) compound surrounds the ceramic insulator (3) and the electrical conductor (2) in portions.

13. The line gland according to any one of the Claims 1 to 12, **characterized by** a second casting compound (22) from a silicone on the end on the low-pressure chamber side, wherein the second casing compound (22) surrounds the ceramic insulator (3) and the electrical conductor (2) in portions.

14. The line gland according to any one of the Claims 1 to 13, **characterized in that** the or each armouring (9, 15) consists of a copper material.

## Revendications

1. Passage de ligne étanche aux fluides pour insérer un conducteur électrique (2) dans un espace à haute pression, comportant un logement (4) et un conducteur électrique (2) traversant le logement (4), **caractérisé en ce que** entre le logement (4) et le conducteur électrique (2) un isolateur céramique (3) est positionné, dans lequel l'isolateur céramique (3) est divisé en formant un plan de séparation conique (6) en un premier segment d'isolateur (7), tourné vers le conducteur électrique (2) et un deuxième segment d'isolateur (8) tourné vers le logement (4) et dans lequel entre les deux segments (7, 8) une armature (9) constituée d'un matériau conducteur électriquement est positionnée, qui est reliée avec les deux segments (7, 8) et le logement (4).

2. Passage de ligne selon la revendication 1, **caractérisé en ce que** de surfaces de séparation (10) du plan de séparation conique (6) sont métallisées et **en ce que** l'armature (9) est reliée par brasage aux surfaces de séparation (19) de l'isolateur céramique (3).

3. Passage de ligne selon la revendication 1 ou 2, **caractérisé en ce que** l'armature (9) est reliée au logement (4) par soudure.

4. Passage de ligne selon une des revendications 1 à 3, **caractérisé en ce que** entre le premier segment d'isolateur (7) tourné vers le conducteur électrique (2) et le conducteur électrique (2), un interstice (17) est ménagé dans un ordre de grandeur entre 0.01 mm et 0.1 mm, notamment dans un ordre de grandeur entre 0.03 mm et 0.05 mm.

5. Passage de ligne selon une des revendications 1 à 4, **caractérisé en ce que** le premier segment d'isolateur (7), tourné vers le conducteur électrique (2) est métallisé sur une surface intérieure (14) tournée vers le conducteur électrique (2).

6. Passage de ligne selon une des revendications 1 à 5, **caractérisé en ce que** le conducteur électrique (2), l'isolateur céramique (3) et le logement (4) présentent un diamètre échelonné.

7. Passage de ligne selon la revendication 6, **caractérisé en ce que** le conducteur électrique (2) présente sur une portion du côté de l'espace à haute pression un plus grand diamètre extérieur que sur une portion du côté de l'espace à basse pression, de telle sorte que la portion du côté de l'espace à haute pression du conducteur électrique (2) vient en prise par derrière avec une portion du côté de l'espace à haute pression de l'isolateur céramique (3) du côté de l'espace à haute pression, et **en ce que** le logement (4) présente sur une portion du côté de l'espace à haute pression un plus grand diamètre intérieur que sur une portion du côté de l'espace à basse pression, de telle sorte que la portion du logement (4) du côté de l'espace à basse pression vienne en prise avec une portion centrale de l'isolateur céramique (3) du côté de l'espace à basse pression.

8. Passage de ligne selon la revendication 7, **caractérisé en ce que** entre la portion du côté de l'espace à haute pression du conducteur électrique (2) et la portion du côté de l'espace à haute pression de l'isolateur céramique (3) une armature supplémentaire (15) constituée d'un matériau électriquement conducteur est positionnée, qui est reliée avec l'isolateur céramique (3) et le conducteur électrique (2).

9. Passage de ligne selon la revendication 8, **caractérisé en ce que** l'isolateur céramique (3) est métallisé sur une surface (16) tournée vers l'armature supplémentaire (15) et **en ce que** l'armature supplémentaire (9) est reliée par brasage avec cette surface (16) de l'isolateur céramique (3).

10. Passage de ligne selon la revendication 8 ou 9, **caractérisé en ce que** l'armature supplémentaire (15) est reliée par soudure avec le conducteur électrique (2).

11. Passage de ligne selon une des revendications 7 à 10, **caractérisé en ce que** entre la portion du côté de l'espace à basse pression du logement (4) et la portion centrale de l'isolateur céramique un élément conducteur électriquement (20) est positionné.

12. Passage de ligne selon une des revendications 1 à 11, **caractérisé par** une première masse de scellement (21) constituée d'une résine époxyde à l'extrémité du côté de l'espace à haute pression, dans lequel la première masse de scellement (21) entoure sur des portions l'isolateur céramique (3) et le conducteur électrique (2).

13. Passage de ligne selon une des revendications 1 à 12, **caractérisé par** une deuxième masse de scellement (22) constituée d'un silicone à l'extrémité du côté de l'espace à basse pression, dans lequel la deuxième masse de scellement (22) entoure sur des portions l'isolateur céramique (3) et le conducteur électrique (2).

14. Passage de ligne selon une des revendications 1 à 13, **caractérisé en ce que** la ou chaque armature (9, 15) est constituée d'une matière plastique.
